# EUROPÄISCHE PATENTANMELDUNG

(11) **EP 0 838 782 A2**
(43) Veröffentlichungstag der Anmeldung: **29.04.1998**
(21) Anmeldenummer: 97116194.8
(22) Anmeldetag: 17.09.1997
(51) Int. Cl.: G06K 19/07

(54) **Vorrichtung zum Personalisieren von Identifikationskarten**

(30) Priorität: 24.10.1996 DE 19644306
(71) Anmelder: Kunz GmbH, 1220 Wien (AT)
(72) Erfinder: Dorner, Frank, 1220 Wien (AT)
(74) Vertreter: Haft, von Puttkamer, Berngruber, Czybulka

(57) **Zusammenfassung**

Eine Vorrichtung zur Personalisierung von Identifikationskarten (1) mit integrierter Schaltung (59) weist wenigstens eine Druckstation (2) und eine Wendestation (3) zum Wenden und Weitertransport der bedruckten Karte (1) auf. Die Wendestation (3) besitzt einen Rotor (36), wenigstens eine daran befestigte Kartentransporteinrichtung sowie eine Kontaktiereinrichtung (60) zum Laden der integrierten Schaltung (59) der Karten (1).

## Beschreibung

Die Erfindung bezieht sich, auf eine Vorrichtung zum Personalisieren von Identifikationskarten nach dem Oberbegriff des Anspruchs 1.

Eine derartige Vorrichtung ist bereits bekannt. Sie dient zur Ausgabe bedruckter Identifikationskarten mit integrierter Schaltung nach ISO7816-2, also sogenannten Chip-Karten. Dabei wird mit der einen Druckstation die Vorderseite der Karte bedruckt, die Karte in der Wendestation gewendet und dann z. B. mit einer zweiten Druckstation die Rückseite der Karte bedruckt oder an einer Prägestation alphanumerische Daten in die Karte geprägt, die von ihr erhaben vorstehen. Die Kontaktiereinrichtung zum Laden des Chips der Karte ist der Wendestation nachgeordnet.

Die Druckstation kann entsprechend EP 0153693 B1 einen Thermodruckkopf aufweisen, der aus einer quer zur Kartentransportrichtung verlaufenden Reihe von mit einer EDV-Anlage einzeln ansteuerbaren Heizelementen mit einer Dichte von beispielsweise 100 Heizelementen pro cm besteht. Mit dem Thermodruckkopf kann in zwei Koordinaten geschrieben werden, wobei sich die eine Koordinate in der Kartentransportrichtung und die andere quer dazu erstreckt. Die Steuerung und Taktung des Transports der Karte erfolgt mit einem Schrittmotor, der die Karte in der Dichte der Heizelemente entsprechenden Schritten an der Heizelementenreihe vorbeibewegt. Um Identifikationskarten aus Kunststoff oder von mit Kunststoff beschichtete Identifikationskarten zu bedrucken, ist eine Farbtransferfolie vorgesehen, die zwischen der Karte und dem Thermodruckkopf hindurch bewegt und durch eine Gegendruckwalze sowohl gegen die Heizelemente wie gegen die Karte gedrückt wird. Die Farbtransferfolie weist eine Farbübertragungsschicht mit einem thermoaktiven Klebstoff auf, so daß sie bei Erwärmung durch die Heizelemente an der Kunststoffkartenoberfläche haftet. Dazu muß der thermoaktive Klebstoff die Kunststoffoberfläche der Karte anschmelzen. Demgemäß bestehen die Karten vorzugsweise aus einem Kunststoff, der bei der Temperatur, den die durch die Heizelemente erwärmte Farbtransferfolie erreicht, an der Oberfläche erweicht, insbesondere aus Polyvinylchlorid, ABS oder Polypropylen.

Während das Bedrucken oder Prägen der Karte nur wenige Sekunden in Anspruch nimmt, ist das Laden der Chips zeitaufwendiger und kann, wenn eine größere Informationsmenge zu übertragen ist, ein Vielfaches der Druck- bzw. Prägezeit betragen. Die Zeit zum Laden der Chips hat daher einen wesentlichen Einfluß auf die Geschwindigkeit der bekannten Personalisierungsvorrichtung.

Aus EP 0 597 135 A1 ist eine Vorrichtung zum Lesen und Beschreiben von Magnetkarten mit einer Druckstation bekannt, mit der auch kontaktbehaftete Chipkarten gelesen werden können. Dazu werden die Chipkarten von einem Kartenschacht in einer drehbaren Aufnahmetrommel einer Chiplesestation in einem Kanal in dem Gehäuse der Vorrichtung zugeführt. Die Aufnahmetrommel kann auch zum Wenden einer Chipkarte verwendet werden, wenn diese nicht mit der den Chipkontakten zugewandten Seite eingeschoben werden. Sonst dient die Aufnahmetrommel jedoch als eine Art Wieche, um die Karten in die einzelnen Kanäle in dem Gehäuse zu bringen.

Aufgabe der Erfindung ist es, die Geschwindigkeit der bekannten Chipkarten-Personalisierungsvorrichtung auf einfache Weise wesentlich zu steigern.

Dies wird erfindungsgemäß durch die im Anspruch 1 gekennzeichnete Vorrichtung erreicht. In den Unteransprüchen sind vorteilhafte Ausgestaltungen der erfindungsgemäßen Vorrichtung wiedergegeben.

Die erfindungsgemäße Vorrichtung ist nicht nur für Personalisierungsvorrichtungen geeignet, die eine Druckstation vor und eine Druckstation oder sonstige Kartenbearbeitungsstation nach der Wendestation aufweisen. Sie ist insbesondere für eine Vorrichtung zum beidseitigen Bedrucken von Chipkarten mit nur einer einzigen Druckstation bestimmt. Diese Druckstation weist einen Thermodruckkopf, eine Kartentransporteinrichtung zum schrittweisen Vorbeibewegen der Karte an dem Thermodruckkopf, einen Eingangssensor an ihrer von der Wendestation abgewandten Seite zum Einschalten der Kartentransporteinrichtung bei Zufuhr einer Karte und einen Ausgangssensor zum Ausschalten der Kartentransport-einrichtung auf. Die Kartentransporteinrichtung der Wendestation ist dabei so gesteuert, daß sie nach Zufuhr der einseitig bedruckten Karte und Drehung des Rotors um 180°C die gewendete, einseitig bedruckte Karte der Druckstation wieder zuführt. Die Kartentransportvorrichtung der Druckstation ist zum Rücktransport der Karte vom Ausgangssensor zum Eingangssensor von der Hin- in die Rücktransportrichtung umschaltbar. Bei Zufuhr der gewendeten Karte schaltet der Ausgangssensor die in die Rücktransportrichtung umgeschaltete Kartentransportrichtung der Druckstation ein. Nach Zufuhr der Karte zum Eingangssensor wird die Kartentransporteinrichtung zum Bedrucken der anderen Seite und zur erneuten Zufuhr zur Wendestation in die Hintransportrichtung zurückgeschaltet.

Unter einer Identifikationskarte sind dabei sowohl Ausweiskarten, also Karten, die eine Identifizierung Ihres Inhabers ermöglichen oder ihn als Angehörigen einer Gruppe ausweisen, wie Berechtigungskarten, also Karten, die dem Inhaber die Inanspruchnahme bestimmter Leistungen ermöglichen, zu verstehen.

Die Kartentransporteinrichtung am Rotor kann durch Walzenpaare gebildet sein, die in Kartentransportrichtung in einem Abstand angeordnet sind, der kleiner ist als die Länge der Karte. Anstelle der Walzenpaare kann auch ein umlaufendes Transportband mit Gegendruckwalzen oder ein Paar von Transportbändern vorgesehen sein.

Der Rotor kann nur eine, sich in radialer Richtung erstreckende Kartentransporteinrichtung aufweisen, oder mehrere, insbesondere zwei Kartentransporteinrichtungen, deren Kartentransportrichtungen sich kreuzen. In diesem Fall müssen die Walzen, bzw. die Transportbänder so angeordnet sein, daß der mittlere Bereich, in dem sich die Transportrichtungen kreuzen, freibleibt.

Nachstehend sind verschiedene Ausführungsformen der erfindungsgemäßen Vorrichtung anhand der Zeichnung beispielsweise erläutert. Darin zeigen jeweils schematisch:
Figur 1 einen Längsschnitt durch die Druckstation und die Wendestation der Chipkarten-Personalisierungsvorrichtung, wobei die zu personalisierende Karte in der Druckstation angeordnet ist;
Figur 2 eine Draufsicht auf die Wendestation nach Figur 1, jedoch mit Karte in der Wendestation;
Figur 3 einen Schnitt entlang der Linie III-III in Figur 2, jedoch gegenüber Figur 2 vergrößert;
Figur 4 in stark schematischer Wiedergabe eine Wendestation mit einem Rotor mit zwei Chipkontaktiereinrichtungen, und
Figur 5 eine Wendestation nach Figur 4 jedoch mit vier Chipkontaktiereinrichtungen.

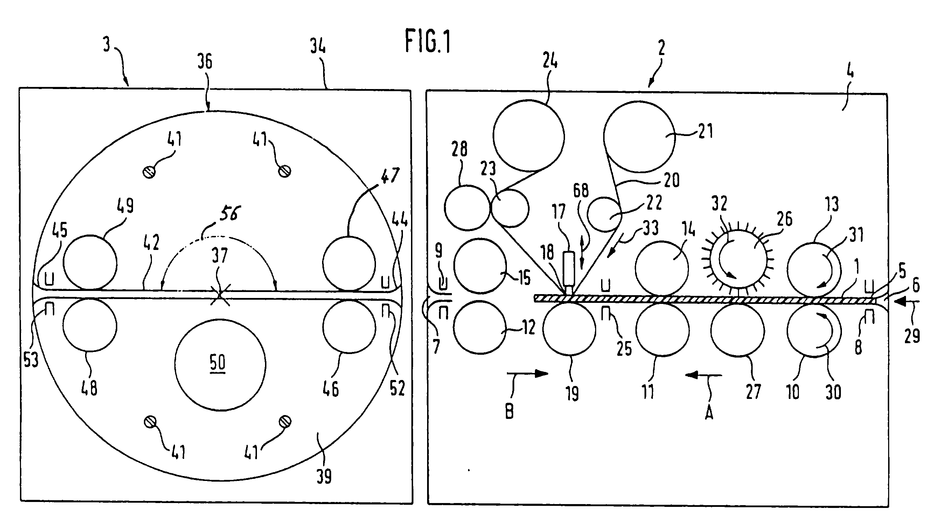

Gemäß Figur 1 besteht die Vorrichtung zum Personalisieren einer Identifikationskarte 1 aus Kunststoff, aus einer Druckstation 2 und einer dieser unmittelbar nachgeordneten Wendestation 3.

Die Druckstation 2 weist ein Gehäuse mit zwei Seitenwänden auf, wobei in Figur 1 nur die hintere Seitenwand 4 zu sehen ist.

An dem eingangsseitigen und dem ausgangsseitigen Ende sind die Seitenwände mit Führungen 5 versehen, die sich zum Einführen der Längskanten der Karte 1 in Form von Trichtern 6, 7 erweitern. Dann übernehmen die beiden Seitenplatten auf beiden Seiten der Karte 1 die seitliche Führung. Am eingangsseitigen und am ausgangsseitigen Ende ist jeweils ein Sensor 8, 9 vorgesehen.

Die Einrichtung zum Transport der Karte 1 weist drei Walzen 10, 11, 12 an der einen, unteren Seite der Karte 1 und drei Walzen 13, 14, 15 an der anderen, oberen Seite der Karte 1 auf. Die Walzen 10, 11, 12, werden über ein nicht dargestelltes Zahnradgetriebe von einem nicht dargestellten Schrittmotor angetrieben und bilden mit den Walzen 13, 14, 15, die nicht angetrieben sind, Walzenpaare, zwischen denen die Karte 1 hindurchgeführt wird, um sie in Richtung des Pfeiles A von dem Eingangssensor 8 zum Ausgangssensor 9 zu bewegen (Hin- Transportrichtung). Der Abstand der Walzenpaare 10, 13 und 11, 14 bzw. 11, 14 und 12, 15 ist so bemessen, daß die Karte 1 immer von wenigstens einem Walzenpaar erfaßt ist.

Zwischen den beiden Walzenpaaren 11, 14 und 12, 15 ist auf der einen, oberen Seite der Karte 1 ein Thermodruckkopf 17 angeordnet. Der Thermodruckkopf 17 ist als hochkantstehende Platte ausgebildet und weist an seiner der Karte 1 zugewandten Kante Heizelemente 18 auf. Die Heizelemente 18 bilden eine Reihe, die sich quer zur Transportrichtung A erstreckt. Die Heizelemente 18 sind mit einer nicht dargestellten EDV-Anlage einzeln ansteuerbar.

Auf der dem Thermodruckkopf 17 gegenüberliegenden Seite der Karte 1 ist eine nicht angetriebene Gegendruckwalze 19 angeordnet.

Zum Bedrucken ist eine Thermotransferfolie 20 vorgesehen, die von einer Vorratsrolle 21 abgewickelt, über eine Umlenkrolle 22 um die untere Kante des Thermodruckkopfes 17 mit den Heizelementen 18 herum und dann über eine Umlenkrolle 23 einer Aufwickelrolle 24 zugeführt wird, die durch einen nicht dargestellten Motor angetrieben wird, um die Folie 20 auf der Seite der Aufwickelrolle 24 des Thermodruckkopfes 17 straff zu halten.

Die Karte 1 wird durch die Gegendruckwalze 19 gegen die Heizelemente 18 des Thermodruckkopfes 17 unter Zwischenschaltung der Thermotransferfolie 20 gedrückt.

An dem Thermodruckkopf 17 sind die Heizelemente 18 beispielsweise in einem Abstand von ca. 0,008 mm von Mitte Heizelement zu Mitte Heizelement angeordnet. Der Schrittmotor treibt dann die Walzen 10, 11, 12 beispielsweise so um, daß die Karte 1 in Richtung des Pfeiles A ebenfalls in Schritten von ca. 0,008 mm transportiert wird. Pro Schritt kann durch die einzeln ansteuerbaren Heizelemente 18 eine Querreihe von Farbpunkten von der Thermotransferfolie 20 auf die Kartenoberfläche übertragen werden. Die Verweilzeit für die Farbübertragung zwischen den Transportschritten beträgt im allgemeinen zwischen 0,2 und 2 ms, also beispielsweise 0,5 ms.

Auf der dem Eingangssensor 8 zugewandten Seite ist vor dem Thermodruckkopf 17 ein weiterer Sensor 25 angeordnet. Die Sensoren 8, 9 und 25 sind vorzugsweise jeweils aus zwei Lichtschranken gebildet, die auf der einen bzw. anderen Seite der Karte angeordnet sind.

Ferner ist eine von dem Schrittmotor über das Zahnradgetriebe angetriebene Bürstenwalze 26 zwischen den beiden Walzenpaaren 10, 13 und 11, 14 angeordnet, welche beim Transport der Karte 1 in Richtung des Pfeiles 32 entgegengesetzt zu den Walzen 10, 11 und 12 umläuft und mit einer nicht angetriebenen Gegenwalze 27 zusammenwirkt. Um Partikel und dergleichen Verschmutzungen von der Kartenoberfläche zu entfernen, kann neben der Bürstenwalze 26 noch eine nicht dargestellte Walze mit einer Klebstoffoberfläche vorgesehen sein, an der die Schmutzpartikel haften.

Um einen Farbdruck mit einer Farbfolie 20, die abschnittsweise Farbübertragungsmaterial in den Grundfarben: Magenta, Cyan, Gelb und Schwarz aufweist, durchzuführen, ist ein Laufrad 28 vorgesehen, das die Länge der transportierten Folie 20 mißt und damit die Position der einzelnen Abschnitte genau bestimmt.

Wenn die Karte 1 zum Bedrucken dem Eingang 29 zugeführt wird, schaltet die Lichtschranke 8 den Schrittmotor ein, so daß die Walzen 10, 11, 12 mit ihren Gegenwalzen 13, 14, 15 entsprechend den Pfeilen 30, 31 umlaufen.

Die Bürstenwalze 26 läuft in Gegenrichtung gemäß dem Pfeil 32 um.

Auf diese Weise wird die Karte vom Eingangssensor 8 zu dem Thermodruckkopf 17 transportiert. Sie zieht dabei die Thermotransferfolie 20 in Richtung des Pfeiles 33 unter dem Thermodruckkopf 17 hindurch. Dabei wird die Folie 20 durch die Karte 1 transportiert. Die von einem Motor angetriebene Aufwickelrolle 24 dient nur dazu, eine Bandlose auf der der Aufwickelrolle 24 zugewandten Seite des Thermodruckkopfes 17 zu verhindern.

Der Sensor 25 vor dem Thermodruckkopf 17 dient dazu, daß die Stelle auf der Karte 1 möglichst genau positioniert wird, von der an der Thermodruckkopf 17 die Karte bedruckt.

Wenn die Karte 1 die Druckstation 2 verläßt, schaltet der Sensor 9 am Ausgang den Schrittmotor aus.

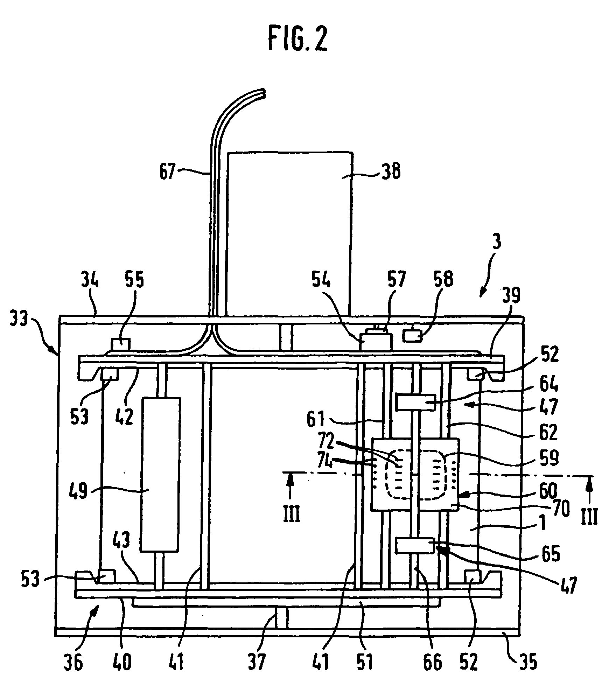

Die Wendestation 3 besteht gemäß Figur 1 und 2 aus einem Gehäuse 33 mit zwei Seitenwänden 34, 35, zwischen denen ein Rotor 36 mit einer Welle 37 drehbar gelagert ist, die quer zur Transportrichtung A verläuft und von einem Wendemotor 38 angetrieben wird.

Der Rotor 36 besteht aus zwei scheibenförmigen Seitenwänden 39, 40, die durch mehrere Streben 41 miteinander verbunden sind.

Beide Seitenwände 39, 40 des Rotors 36 weisen nutförmige Führungen 42, 43 für die Karte 1 auf, die eingangsseitig und ausgangsseitig mit trichterförmigen Erweiterungen 44, 45 zum Einführen der Karte 1 in die Führungen 42, 43 von der einen bzw. anderen Seite versehen sind.

Zum Transport der Karte 1 in der Wendestation 3 ist an dem Rotor 36 an den Führungen 42, 43 auf der einen bzw. anderen Seite jeweils ein Walzenpaar 46, 47 bzw. 48, 49 vorgesehen, die durch einen am Rotor 36 befestigten Motor 50 über ein in Figur 2 schematisch dargestelltes Zahnradgetriebe 51 angetrieben werden.

Dabei werden vorzugsweise beide Walzen 46 und 47 bzw. 48 und 49 jedes Walzenpaares angetrieben, damit das Gewicht der Karte 1 beim Wenden die Transportgeschwindigkeit nicht verändern kann.

Mit dem Walzenpaar 46, 47 wird die Karte 1 übernommen, wenn sie, nachdem sie auf der Oberseite von dem Thermodruckkopf 17 bedruckt worden ist, die Druckstation 2 über den Ausgangssensor 9 verläßt.

An beiden Seiten der Kartentransporteinrichtung der Wendestation 3 sind am Rotor 36 Sensoren 52, 53 befestigt. Jeder Sensor 52, 53 besteht, wie aus Figur 2 ersichtlich, aus zwei Lichtschranken an der einen bzw. der anderen Längsseite der Karte 1. Jede Lichtschranke ist ihrerseits wieder aus einer Lichtquelle auf der einen und einer Fotozelle auf der anderen Seite der Karte 1 zusammengesetzt.

Der Rotor 36 ist mit dem Wendemotor 38 entsprechend dem Doppelpfeil 56 in Figur 1 in der einen bzw. anderen Richtung um 180° drehbar. Dabei sind nicht dargestellte Anschläge zur Begrenzung des Drehweges auf 180° zwischen den Drehpositionen vorgesehen.

An der Wand 39 des Rotors 36 sind zwei Nasen 54, 55 angebracht, die mit zwei Lichtschranken 57, 58 zusammenwirken, die an der Seitenwand 34 des Gehäuses 33 befestigt sind.

Wenn die Karte 1 von der Druckstation 2 dem Sensor 52 der Wendestation 3 zugeführt wird, schaltet dieser den Transportmotor 50 ein, so daß die Transportwalzen 46, 47 die Karte 1 weiter transportieren, bis sie den Sensor 53 am anderen Ende des Rotors 36 erreicht. Der Sensor 53 schaltet dann den Transportmotor 50 ab und den Wendemotor 38 ein, so daß der Rotor 36 um 180° gedreht wird. Die Drehstellung des Rotors 36, also ob der Sensor 52 der Druckstation 2 zugewandt ist oder der Sensor 53, wird von den Sensoren 57, 58 erfaßt, die als Lichtschranken mit den Nasen 54 bzw. 55 zusammenwirken.

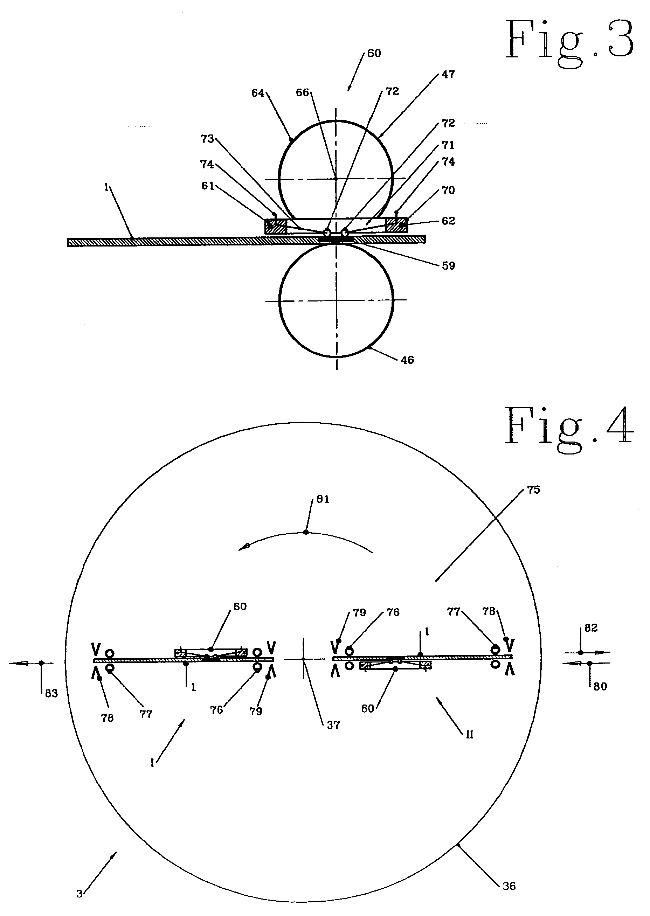

Die Identifikationskarte 1 weist gemäß Figur 3 einen Chip, also eine codierbare Mikroschaltung 59 auf, die in Figur 2 gestrichelt dargestellt ist. Erfindungsgemäß ist, um die Chipkarten 1 in der Wendestation 3 zu laden, während die nächste Karte 1 in der Druckstation 2 bedruckt wird, der Rotor 36 der Wendestation 3 mit einer Kontaktiereinrichtung 60 zum Laden der Chips 59 der Karten 1 versehen.

Die Kontaktiereinrichtung 60 besteht gemäß Figur 2 und 3 aus einer Platte 70, beispielsweise auf Kunststoff, in der sich in in Kartentransportrichtung erstreckenden Schlitzen 71 Chipkontakte befinden, die jeweils ein Kontakträdchen 72 mit quer zur Transportrichtung verlaufenden Drehachse aufweisen, welche an zur Karte 1 hin federbelasteten Armen 73 drehbar befestigt sind, deren von den Rädchen 72 abgewandten Enden sich durch den massiven Randbereich der Kunststoffplatte 70 zu den Kontakten 74 erstrecken, an die eine (nicht dargestellte) EDV-Anlage angeschlossen ist, mit der die Kontaktiereinrichtung 60 angesteuert wird.

Damit für die Chipkontaktiereinrichtung 60 im Bereich des Chips 59 hinreichend Platz zur Verfügung steht, ist die Transportwalze 47 gemäß Figur 2 durch zwei scheibenförmige Rollen 64 und 65 auf der Achse 66 gebildet, wie aus Figur 2 und 3 zu ersehen.

Die elektrische Versorgung der elektrischen Einrichtungen am Rotor 36, also des Motors 50, der Sensoren 52, 53 und der Kodiereinrichtung 60 erfolgt durch ein Bündel von Kabel 67, welches sich mit dem Rotor 36 mitdreht.

Wenn die Karte 1 gemäß Figur 1 von dem Thermodruckkopf 17 der Druckstation 2 einseitig bedruckt, ihr Chip 59 mit der Chipkontaktiereinrichtung 60 am Rotor 36 der Wendestation 3 geladen und sie mit der Wendestation 3 gewendet worden ist, wird sie der Druckstation 2 wieder zugeführt, um sie auf der anderen Seite zu bedrucken. Dazu wird der Transportmotor 50 nach dem Wenden der Karte 1 nicht umgeschaltet, wodurch die Karte ohne Änderung der Drehrichtung der Transportwalzen 46 bis 49 dem Ausgangssensor 9 der Druckstation 2 zugeführt wird, so daß sie entsprechend dem Pfeil B in Figur 1 an dem Druckkopf 17 vorbei zum Eingangssensor 8 bewegt wird. D. h., der Ausgangssensor 7 schaltet den Schrittmotor in umgekehrter Umlaufrichtung ein und, wenn die einseitig bedruckte, entsprechend dem Pfeil B in Rücktransportrichtung bewegte Karte 1 den Eingangssensor 8 erreicht hat, schaltet dieser den Schrittmotor in die andere Umlaufrichtung um, so daß die Transporteinrichtung die Karte 1 dem Thermodruckkopf 17 zum Bedrucken der anderen Kartenseite wieder in der Hin-Transportrichtung gemäß dem Pfeil A zuführt.

Damit die Karte beim Rücktransport vom Ausgangssensor 9 zum Eingangssensor 8 die Thermotransferfolie 20 nicht berührt, ist der Thermodruckkopf 17 gemäß dem Pfeil 68 auf- und abbewegbar ausgebildet, d. h. er wird beim Rücktransport der Karte angehoben.

Nachdem die Karte 1 auf beiden Seiten bedruckt worden ist, wird sie erneut den Wendestation 3 zugeführt. Sie kann dann von der Wendestation 3 ungewendet oder gewendet auf der der Druckstation 2 abgewandten Seite der Wendestation 3 ausgegeben werden.

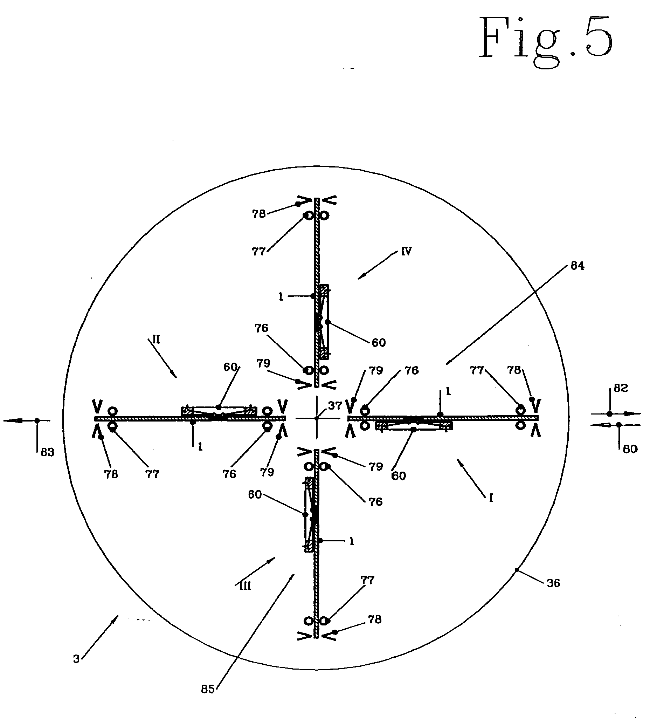

Bei der Ausführungsform nach Figur 4 weist der Rotor 36 der Wendestation 3 eine Kartentransporteinrichtung 75 auf, die sich, wie bei der Wendestation nach Figur 1 bis 3, radial zur Drehachse 37 des Rotors 36 erstreckt.

Die Kartentransporteinrichtung 75 nach Figur 4 besteht jedoch aus zwei Abschnitten I und II, auf der einen bzw. anderen Seite der Drehachse 37.

Jeder Abschnitt I und II weist zwei Walzenpaare 76, 77 auf. Der Abstand aller Walzenpaare 76, 77 der Kartentransporteinrichtung 75 voneinander ist kleiner als die Länge der Chipkarten 1. An jedem Abschnitt I, II ist eine Chipkontaktiereinrichtung 60 vorgesehen, ferner an beiden Enden jedes Abschnittes I und II ein Sensor 78, 79, beispielsweise in Form einer Lichtschranke, der die Gegenwart oder Abwesenheit einer Karte 1 feststellt und danach die Drehbewegung des Rotors 36 und die Chipkontaktiereinrichtungen 60 steuert.

Wenn der Wendestation 3 nach Figur 4 eine erste Karte 1 gemäß dem Pfeil 80 nach dem Bedrucken Ihrer Vorderseite von einer Druckstation 2 zugeführt wird, wird sie mit den Walzenpaaren 76, 77 über den Abschnitt II zum Abschnitt I der Kartentransporteinrichtung 75 transportiert, wo der Chip 59 der Karte 1 von der Chipkontaktiereinrichtung 60 des Abschnitts I geladen wird. Die nächste, zweite Karte 1, die beidseitig bedruckt und deren Chip 59 bereits zum Teil geladen ist, wird, ohne daß der Rotor 36 gedreht wird, von der Druckstation 2 gemäß dem Pfeil 80 zu dem Abschnitt II transportiert. Anschließend wird der Rotor 36 um 180° gemäß dem Pfeil 81 gedreht, wobei der Chip 59 der Karte 1 im Abschnitt I teilgeladen und der Chip 59 der Karte 1 im Abschnitt II vollständig geladen wird. Daraufhin wird die beidseitig bedruckte Karte 1 mit vollständig geladenem Chip 59 im Abschnitt II gemäß dem Pfeil 83, der der Wendestation 3 nachgeordneten Bearbeitungsstation der Kartenpersonalisierungseinrichtung zugeführt, und die auf der Vorderseite bedruckte Karte 1 mit teilweise geladenem Chip 59 im Abschnitt I gemäß dem Pfeil 82 der Druckstation 2 zum Bedrucken ihrer Rückseite zugeführt.

Bei der Wendestation 3 nach Figur 5 sind zwei sich im rechten Winkel kreuzende Kartentransporteinrichtungen 84, 85 vorgesehen, die aus jeweils zwei Abschnitten I und II bzw. III und IV bestehen, die auf der einen bzw. anderen Seite der Drehachse 37 des Rotors 36 angeordnet sind. Jeder Abschnitt I bis IV ist in gleicher Weise ausgebildet, wie die Abschnitte I und II der Kartentransporteinrichtung 75 nach Figur 4. Bei der Wendestation nach Figur 5 erfolgt der Wendevorgang jedoch in zwei Schritten von je 90°. Dadurch können insgesamt vier Karten 1 gleichzeitig im Rotor 36 geladen werden. Damit die Karten 1 von dem einen Abschnitt I zum anderen Abschnitt II der Kartentransporteinrichtung 84 bzw. von dem einen Abschnitt III zum anderen Abschnitt IV der Kartentransporteinrichtung 85 bewegt werden können, ist es notwendig, daß im Bereich der Drehachse 37 zum Kartentransport von einem Abschnitt I zum anderen Abschnitt II bzw. von einem Abschnitt III zum anderen Abschnitt IV einen Freiraum vorgesehen ist.

Statt der geschilderten Ausführungsform kann die in Fig. 5 dargestellte Wendestation auch so ausgebildet sein, daß eine auf einer Seite bedruckte Karte von der Druckstation gemäß dem Pfeil 80 z.B. von dem ersten Abschnitt I aufgenommen wird, die Wendestation dann um 90° bzw. einem den Winkel zwischen den Abschnitten I bis IV entsprechenden Winkel in einer Richtung gedreht wird, die nächste Karte von der Druckstation gemäß dem Pfeil 80 von dem nächsten Abschnitt III in dieser Drehrichtung aufgenommen wird usw., wobei bei Drehung jeder Karte um 360° die gewendete Karte dann gemäß dem Pfeil 82 der Druckstation wieder zugeführt wird, um die andere Seite zu bedrucken. Während der schrittweisen Drehung der Wendestation um 360° wird der Chip jeder Karte geladen. Jeder Abschnitt I bis IV weist dann eine separat steuerbare hin- und herbewegliche Kartentransporteinrichtung auf.

## Patentansprüche

1. Vorrichtung zur Personalisierung von Identifikationskarten mit integrierter Schaltung mit wenigstens einer Druckstation, einer Wendestation zum Wenden und/oder Weitertransport der bedruckten Karte, welche einen Rotor mit einer quer zur Kartentransportrichtung verlaufenden Drehachse und wenigstens eine am Rotor befestigte Kartentransporteinrichtung aufweist, und mit einer Kontaktiereinrichtung zum Laden der integrierten Schaltung der Karten, dadurch gekennzeichnet, daß die Kontaktiereinrichtung (60) am Rotor (36) der Wendestation (3) angeordnet ist.

2. Vorrichtung nach Anspruch 1, dadurch gekennzeichnet, daß die Kartentransporteinrichtung (48, 75, 84, 85) als umlaufende Transporteinrichtung ausgebildet ist, die so gesteuert ist, daß sie die gewendete, bedruckte Karte ohne Änderung Ihrer Umlaufrichtung aus der Wendestation (3) abgibt.

3. Vorrichtung nach Anspruch 1 oder 2, dadurch gekennzeichnet, daß die Kartentransporteinrichtung (75, 84, 85) so ausgebildet ist, daß sie in Kartentransportrichtung wenigstens zwei hintereinander angeordnete Karten (1) aufnimmt und der Rotor (36) mit je einer Kontaktiereinrichtung (60) für jede Karte (1) versehen ist.

4. Vorrichtung nach einem der vorstehenden Ansprüche, dadurch gekennzeichnet, daß der Rotor (36) wenigstens zwei Kartentransporteinrichtungen (84, 85) mit sich kreuzender Kartentransportrichtung aufweist.
